# FASCICULE DE BREVET EUROPEEN

(11) **EP 3 482 264 B1**
(45) Date de publication et mention de la délivrance du brevet: **07.09.2022**
(21) Numéro de dépôt: 17746191.0
(22) Date de dépôt: 05.07.2017
(51) Int. Cl.: G05B 19/4099

(54) **PROCÉDÉ D'USINAGE DE RELIEFS**
VERFAHREN ZUR BEARBEITUNG VON RELIEFS
METHOD FOR MACHINING RELIEFS

(30) Priorité: 05.07.2016 CH 8542016
(43) Date de publication de la demande: 15.05.2019
(73) Titulaire: Gravity.Swiss SA, 2414 Cerneux-Péquignot (CH)
(72) Inventeur: MARGUET, Eric, 2610 Les Pontins (St-Imier) (CH); PESTALOZZI, Patrick, 1270 Trélex (CH)
(74) Mandataire: P&TS SA (AG, Ltd.)
(86) Numéro de dépôt international: PCT/IB2017/054042
(87) Numéro de publication internationale: WO 2018/007952

(56) Documents cités:
- WO-A1-99/01854
- US-A1- 2002 161 469
- Y. N. HU, Y. H. CHEN: "Implementation of a Robot System for Sculptured Surface Cutting. Part 1. Rough Machining", THE INTERNATIONAL JOURNAL OF ADVANCED MANUFACTURING TECHNOLOGY, vol. 15, no. 9, 1999, pages 624-629, XP002768685, DOI: 10.1007/s001700050111
- Y. N. HU, Y. H. CHEN: "Implementation of a Robot System for Sculptured Surface Cutting. Part 2. Finish Machining", THE INTERNATIONAL JOURNAL OF ADVANCED MANUFACTURING TECHNOLOGY, vol. 15, no. 9, 1999, pages 630-639, XP002768686,

## Description

### Domaine technique

La présente invention concerne l'usinage de maquettes de reliefs.

### Etat de l'art

On connait dans l'état de la technique des maquettes de reliefs. On connait par exemple des maquettes de reliefs cartographiques, qui représentent en miniature et en trois dimensions un continent, un pays, un district, une région, une chaîne de montagne, un parc, une vallée, une ville ou une autre zone géographique de 5 kilomètres carrés au moins.

De telles maquettes sont souvent réalisées en bois ou en plastique et ornent par exemple des places d'arts, les halls d'hôtels, des chalets, des réceptions d'office du tourisme, etc. Les maquettes topographiques sont notamment utilisées par les voyageurs pour planifier ou relater une excursion ou une randonnée en se rendant beaucoup mieux compte du relief qu'à l'observation d'une simple carte papier ou électronique.

Des maquettes sont aussi utilisées pour représenter en miniature d'autres types de reliefs munis d'une structure fine et souvent aléatoires. Des maquettes de reliefs végétaux sont par exemple utilisées pour représenter les nervures d'une feuille d'arbre. Des maquettes de reliefs animaux sont par exemple utilisées pour illustrer les structurations de la peau d'un lézard, ou d'autres détails anatomiques animaux ou humains. De telles maquettes de reliefs végétaux ou animaux sont utilisées notamment pour l'enseignement ou simplement en représentation artistique. A noter qu'une maquette de relief peut être un agrandissement (mise en évidence de petits détails difficiles à voir à l'œil nu) ou une diminution d'échelle (mise en évidence de détails difficiles à englober à l'œil nu).

L'usinage soustractif ou additif de maquettes de reliefs implique le calcul de trajectoires d'outil d'usinage et/ou de tête d'impression depuis un ensemble de points de coordonnées X, Y, Z. Ces points de coordonnées proviennent typiquement de satellites ou d'avions équipés d'un laser de scannage (données cartographiques) ou de nuages de points issus d'un microscope (surfaces végétales ou animales).

Les techniques de fabrication généralement soustractives (c'est-à-dire par retrait de matière avec un outil coupant) mises en œuvre pour la fabrication de telles maquettes de reliefs limitent cependant leur résolution ainsi que la quantité d'information qui peuvent y figurer. On connaît par exemple des maquettes en bois ou en plastique de la Suisse ou de l'art alpin dans lesquels la résolution minimale correspond à 1 kilomètre pour des maquettes présentant la Suisse entière. Ces maquettes permettent de bien observer les principales montagnes, mais pas de planifier en détail une excursion.

On connaît par ailleurs des maquettes réalisées par fabrication additive, par exemple au moyen d'une imprimante 3D. Là aussi, la résolution est limitée.

La résolution des maquettes est limitée tout d'abord par la taille et la solidité des outils. En fabrication soustractive par exemple, la taille des fraises ou des autres outils de coupe doit être suffisante pour éviter le risque de casse, qui ralentit la vitesse d'usinage et peut endommager la surface à usiner. Un usinage en un seul passage avec une résolution élevée est donc irréalisable techniquement car pour obtenir un résultat pertinent cela nécessite un outil relativement petit.

Afin d'usiner à haute résolution avec des outils de taille suffisante, on transcrit habituellement dans l'art antérieur le nuage de points XYZ sous forme de surfaces. Cette étape implique typiquement des interpolations pour générer des ensembles de surfaces (par exemple des surfaces NURBS « Non-Uniform Rational B-Splines »). Il en résulte des surfaces lissées, mais tenant compte de la position de chaque point, que la machine à commande numérique commandant l'outil peut interpréter pour déterminer, grâce à un programme de conversion (FAO, Fabrication Assistée par Ordinateur), des trajectoires qu'un outil de plus grande dimension peut usiner.

Ce procédé habituel de calcul de trajectoire se heurte cependant à des difficultés dans le cas de fabrication de maquettes de reliefs de haute résolution. La réalisation d'une cartographie d'un pays tel que la Suisse, avec une résolution de 10 mètres implique typiquement un nuage de points comportant des centaines de millions de points de coordonnées XYZ. Même des ordinateurs très puissants et disposant d'une mémoire vive importante sont débordés par l'ampleur de cette tâche et ne parviennent pas à calculer les surfaces requises par les logiciels générant le code compréhensible par une CNC ou une imprimante 3D.

Afin de résoudre ce problème, il est envisageable de le décomposer en sous-problèmes en découpant la maquette en portions dont les surfaces sont calculées séparément, à la manière d'une mosaïque. Cette approche a cependant l'inconvénient de générer des surfaces d'interpolation qui présentent des discontinuités à la jonction entre deux portions. La maquette présente alors des artefacts sous forme de lignes de jonctions néfastes et difficilement retouchable, et qu'il n'est pas possible de supprimer sans compromettre la précision de la maquette.

On connait aussi des procédés d'usinage de pièces en plusieurs étapes, avec une résolution qui augmente à chaque étape. A titre d'exemple, US2002/161469 décrit un procédé d'usinage de maquettes topographiques à partir d'un nuage de points. L'usinage comprend une première phase d'usinage grossière et une deuxième phase d'usinage fin. Les deux phases sont obtenues à partir d'un mesh tridimensionnel, lui-même obtenu à partir des données topographiques sous forme de points 3D, de contours 3D, ou de contours papiers. Les données de mesh sont ensuite converties en des contours sur une série de plans parallèles, correspondant aux lignes successives d'usinage. Les points d'usinage sont donc uniquement calculés par interpolation sur des lignes, parallèles, aussi bien lors de la première étape que lors de la seconde étape. Cette interpolation linéaire crée des problèmes d'artefacts, notamment en cas de différence d'altitude importante entre deux points voisins sur des lignes adjacentes. En outre, l'interpolation, même limitée à des lignes, nécessite une puissance de calcul et une mémoire considérable lorsque la résolution est élevée.

WO99/01854 décrit un autre procédé d'usinage de modèles topographiques, comprenant l'acquisition d'un nuage de point, puis traitement de ce nuage par filtrage, mise à l'échelle ou ajout de données. L'usinage se fait en un seul passage, ce qui impose un compromis quant à l'outil d'usinage qui doit à la fois retirer des volumes de matière importants, et avoir la résolution la plus élevée possible.

HU Y N et al. ont publié un article en deux parties intitulé « Implementation of a Robot System for Sculptured Surface Cutting » dans « THE INTERNATIONAL JOURNAL OF ADVANCED MANUFACTURING TECHNOLOGY, vol . 15 , no. 9 , 1 janvier 1999, partie 1 « Rough Machining », pages 624-629, partie 2 "Finish Machining », pages 630-639. L'usinage en deux parties permet de résoudre certains des problèmes mentionnés ci-dessus. Toutefois, le calcul des pints d'interpolation pour la première partie nécessite toujours une puissance calcul considérable.

Un but de la présente invention est donc de proposer un procédé qui pallie les inconvénients mentionnés ci-dessus.

### Exposé de l'invention

A cet effet, l'invention concerne un procédé d'usinage d'une maquette de reliefs en haute définition, comportant les étapes suivantes :
1. Obtention d'un premier ensemble d'au moins cinq millions de points représentant un relief, chaque point correspondant à une coordonnée tridimensionnelle (XYZ) ;
2. Echantillonnage dudit ensemble de points, de manière à obtenir un deuxième ensemble de points, le deuxième ensemble de points comprenant moins de points que le premier ensemble ;
3. Calcul de surfaces, par exemple calcul de surfaces NURBS, à partir du deuxième ensemble de points ;
4. Génération d'une ébauche grossière de la maquette à partir desdites surfaces ;
5. Finition de l'ébauche à l'aide d'un outil de finition en suivant une trajectoire d'outil entre les points du premier ensemble de points ou entre les points normalisés du premier ensemble de points.

Ce procédé a l'avantage de ne pas nécessiter de gérer l'intégralité des points d'une représentation d'un relief en haute définition en même temps.

Ce procédé permet de se passer de la puissance de calcul nécessaire aux calculs des surfaces à partir du premier ensemble de points. Il n'y a donc pas de limites informatiques à la résolution d'une maquette, la seule limite étant le temps de réalisation et les capacités relatives entre les outils d'ébauche et de finition.

Ce procédé a en outre l'avantage de conserver la résolution donnée par le premier ensemble de points, qui est appliqué pour la finition.

Les points su premier sous-ensemble non sous-échantillonné sont directement appliqués, après une normalisation optionnelle, à l'outil, sans étape d'interpolation. Ils peuvent donc être transmis à l'outil d'usinage directement, en streaming.

Le calcul des déplacements de l'outil de finition est ainsi relativement simple puisqu'il n'implique pas d'interpolation de surfaces. Les trajectoires entre points successifs du premier ensemble de point peuvent être calculées successivement.

Les points du premier ensemble peuvent être ordonnés, afin de parcourir la surface à usiner dans un ordre tenant compte des capacités de l'outil de finition.

L'ébauche grossière peut être usinée à l'aide d'une première fraise, dite fraise grossière, en commandant les déplacements de ladite fraise grossière à partir desdites surfaces.

L'ébauche de maquettes peut être réalisée en gardant une surépaisseur (en fabrication soustractive) ou une sous-épaisseur (en fabrication additive) de manière à permettre le retrait respectivement l'ajout de matière supplémentaire lors de l'étape de finition.

La taille de l'outil de finition est suffisamment fine pour permettre un usinage en passant directement sur les points du premier ensemble, sans les décalages de rayon calculés habituellement par les programmes de FAO.

L'échantillonnage peut être réalisé en sélectionnant un point sur N, par exemple un point sur 10 ou un point sur 100, dans le premier ensemble de points, et en éliminant les autres points. N est avantageusement compris entre 10 et 10'000. Cette méthode d'échantillonnage présente l'avantage de la rapidité de calcul.

L'échantillonnage peut être réalisé en moyennant les positions de coordonnées XY de N points pris en compte dans chaque échantillon, et en attribuant à l'échantillon l'altitude Z correspondant au point d'altitude Z la plus élevée des points pris en compte dans l'échantillon. Cette variante a l'avantage de réduire le risque de générer une ébauche avec des points XY d'altitude trop basse (ou trop haute), qui ne pourront plus être corrigés par la finition.

L'échantillonnage peut comporter une étape de filtrage spatial passe bas. Par exemple, l'échantillonnage peut être réalisé en moyennant les positions de coordonnées de N points pris en compte dans chaque échantillon, N étant avantageusement compris entre 10 et 10'000. La valeur d'altitude Z de chaque échantillon dépend ainsi de la valeur de plusieurs points.

L'échantillonnage peut comporter une étape de convolution avec un noyau d'échantillonnage. La fonction de convolution utilisée pour le noyau peut être choisie en tenant compte des propriétés de la topographie (par exemple de la bande passante spatiale) et/ou des propriétés de l'outil utilisé pour l'ébauchage, de manière à permettre une reconstruction de l'ébauche fidèle avec un nombre de points plus limité que le nombre de points requis pour obtenir la même fidélité en sélectionnant un point sur N. Dans un mode de réalisation, la fonction de convolution est de type sin(x)/x.

La finition de l'ébauche peut être obtenue en suivant une trajectoire d'outil entre des points normalisés obtenus à partir du premier ensemble de points.

Les points du premier ensemble peuvent être normalisés.

La normalisation des points peut comporter une quantification de leur position. Par exemple, la normalisation peut comporter la détermination de points de coordonnées régulièrement espacés sur une grille XY, avec une altitude Z exprimée par une valeur discrète quantifiée.

La trajectoire de l'outil de finition peut être générée en suivant séquentiellement cette grille normalisée de points, c'est-à-dire en suivant les lignes ou les colonnes de la grille une par une dans les mêmes directions ou dans des directions alternées.

La normalisation peut impliquer un ou plusieurs calculs d'interpolation des coordonnées de points, afin de déterminer l'altitude Z de points sur des intersections XY de la grille pour lesquels le premier ensemble de points ne contient pas de valeurs.

La normalisation peut impliquer un filtrage passe-bas, afin par exemple d'adoucir légèrement les variations importantes de dénivelés et de réduire le risque de bris de l'outil de finition.

Les points du premier ensemble peuvent correspondre à des données topographiques, par exemple à une projection de Mercator. La normalisation peut comprendre une étape de projection de ces données topographiques sur une sphère afin de générer une maquette reproduisant la courbure terrestre.

Le procédé peut comprendre une étape de tri desdits points normalisés du premier ensemble de points de manière à définir la trajectoire d'outil.

Les surfaces calculées pour l'ébauchage grossier et/ou pour l'ébauchage fin peuvent être corrigées de manière à relever leur altitude Z. L'altitude moyenne est alors plus haute que celle correspondant à un profil topographique correct. Cela permet de laisser un excédent de matière retiré lors de la finition, et de réduire le risque de supprimer des pics lors de l'ébauchage.

L'ébauchage grossier peut être effectué au moyen l'aide d'un usinage à 3 axes. L'utilisation de trois axes est suffisant pour la quasi-totalité des profils topographiques, pour lesquels chaque point de coordonnée XY présente généralement une seule altitude.

L'ébauchage fin peut être effectué au moyen l'aide d'un usinage à 3 axes et d'une fraise fine.

La finition peut être effectuée au moyen l'aide d'un usinage à 3 axes.

La finition peut être effectuée par usinage à l'aide d'un outil qui subit une usure, dans ce cas le procédé comporte une étape de retouche de l'outil périodique (aiguisage d'un outil coupant, changement de tête d'impression).

### Brève description des dessins illustrés sur des reliefs cartographiques

D'autres détails de l'invention apparaîtront plus clairement dans la description qui suit en référence aux figures annexées, qui montrent:
- Fig. 1: un système conforme à l'invention;

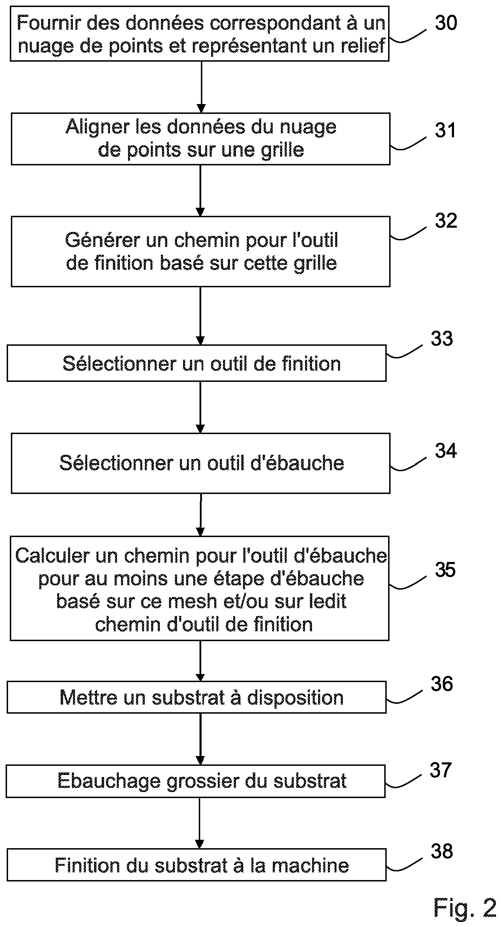

- La figure 2: un organigramme illustrant un procédé de fabrication d'une maquette cartographique destinée à être utilisée dans l'invention;
- Fig. 3: une représentation d'un ensemble de données de nuages de points utilisé comme base pour une maquette cartographique;
- Fig. 4a et 4b: des représentations des limitations sur le diamètre de la pointe de l'outil d'usinage;
- Fig. 5a et 5b: des illustrations bidimensionnelles d'un outil de finition et de la trajectoire de l'outil finition correspondant;
- Fig. 6a: une vue d'un substrat, un outil d'ébauche et la trajectoire de l'outil d'ébauche correspondante;
- Fig. 6b: une vue d'un substrat après dégrossissage;
- Fig. 6c: une vue en trois dimensions d'une partie d'un substrat après l'usinage de finition, avec une trajectoire d'outil de finition;
- Fig. 7 a-d: une représentation schématique du fonctionnement d'un post-processeur direct pour générer une trajectoire de l'outil à partir d'un nuage de points
- Fig. 8: une représentation schématique illustrant le procédé de traitement d'un nuage de points avant une étape d'usinage selon l'invention,

### Mode de réalisation de l'invention

Nous allons maintenant décrire un mode de réalisation de l'invention, illustré à tire d'exemple avec une maquette cartographique

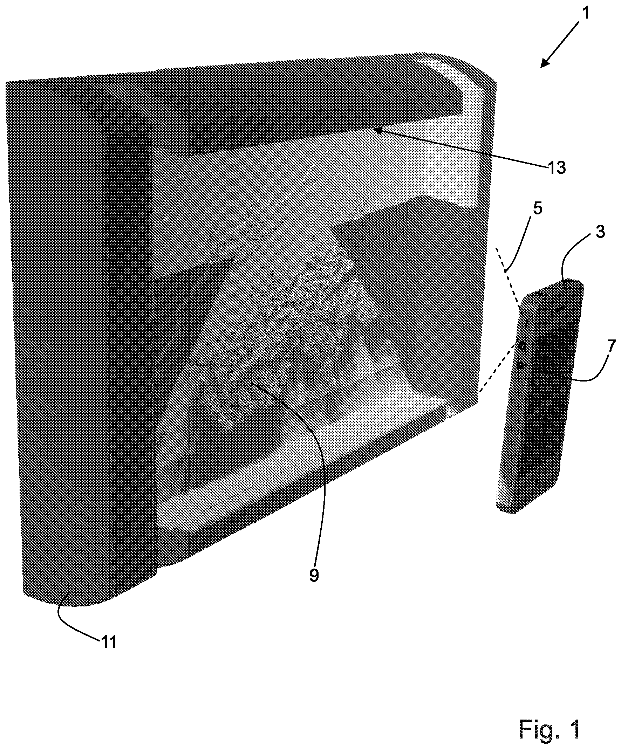

La figure 1 illustre un système 1 selon l'invention. Le système 1 comprend un dispositif électronique multimédia 3, par exemple un « smartphone », une tablette ou similaire, muni d'une caméra 5 (illustrée schématiquement sur la figure 1 par des lignes en pointillés représentant son champ de vision) sur un premier côté de celui-ci, et un écran d'affichage 7 sur un deuxième côté de celui-ci.

Comme il est généralement connu, un tel dispositif électronique multimédia 3 comprend en outre un processeur et un support de stockage lisible par ordinateur, contenu à l'intérieur. Ces deux derniers éléments sont contenus comme cela est classique dans le dispositif 3 et ne sont donc pas illustrés. Le support de stockage lisible par ordinateur contient, stockée dessus, un produit programme d'ordinateur (familièrement appelé "application"), qui comprend des instructions exécutables par ordinateur pour mettre en œuvrele procédé décrit ci-dessous. Le dispositif électronique multimédia 3 serait typiquement fourni par un utilisateur lui-même, mais cela ne doit pas nécessairement être le cas.

Le système 1 comprend en outre une maquette cartographique 9 représentant une portion d'un territoire géographique défini initialement au moyen d'un nuage de points. Dans le cas de la figure 1, le sujet de la maquette 9 est la topographie de la Suisse, et est donc une carte en relief. La maquette cartographique 9 est fabriquée par usinage au moyen d'une machine-outil à commande numérique de haute résolution (CNC) d'un substrat plastique, en métal, en bois ou similaire.

Alternativement, l'usinage CNC d'un moulage par injection ou d'un moule de coulée sous pression est également possible, suivie par un moulage par injection, un moulage par coulée, un moulage par soufflage en plastique ou en métaux légers appropriés pour produire la maquette cartographique 9 est également possible, le substrat 45 étant alors la base pour le moule dans ce cas.

Comme mentionné ci-dessus, dans la figure 1, la maquette cartographique 9 représente la topographie de la Suisse. Elle peut évidemment représenter une quelconque région géographique de toute taille à une échelle appropriée (un pays, une région, un état, une municipalité, une rue, ou même un parc ou une petite zone similaire).

La maquette cartographique 9 peut être laissée incolore, ou peut être peinte, enduite, ou avoir des informations fournies dessus.

Ce système permet à l'utilisateur de visualiser la maquette 9, qui représente dans cet exemple la topographie de la Suisse, avec un dispositif électronique multimédia. Les informations cartographiques correspondantes sont combinées avec l'image de la maquette 9 sur l'écran du dispositif. Par conséquent, l'expérience du rendu de la maquette cartographique 9 est renforcée avec de plus amples informations, sans encombrer la maquette 9 elle-même.

Afin que le dispositif électronique puisse discerner suffisamment de détails de la maquette 9 de manière à correctement analyser la position, l'angle et le recadrage de l'image de la maquette 9 de sorte que le procédé puisse être correctement réalisé, la maquette 9 (ou son moule dans le cas d'une maquette 9 moulée) doit être usinée à un degré de détail suffisant, comme cela sera décrit dans ce qui suit. En particulier, la manière d'usinage (et notamment de calculer les trajectoires de l'outil) assure une représentation exacte et précise des bords qui sont utilisés pour la reconnaissance de l'angle et de l'orientation de la maquette cartographique 9 tel que pris en image par le dispositif électronique 3.

La maquette cartographique 9 est déterminée à partir d'un premier ensemble de points (le « nuage de points).

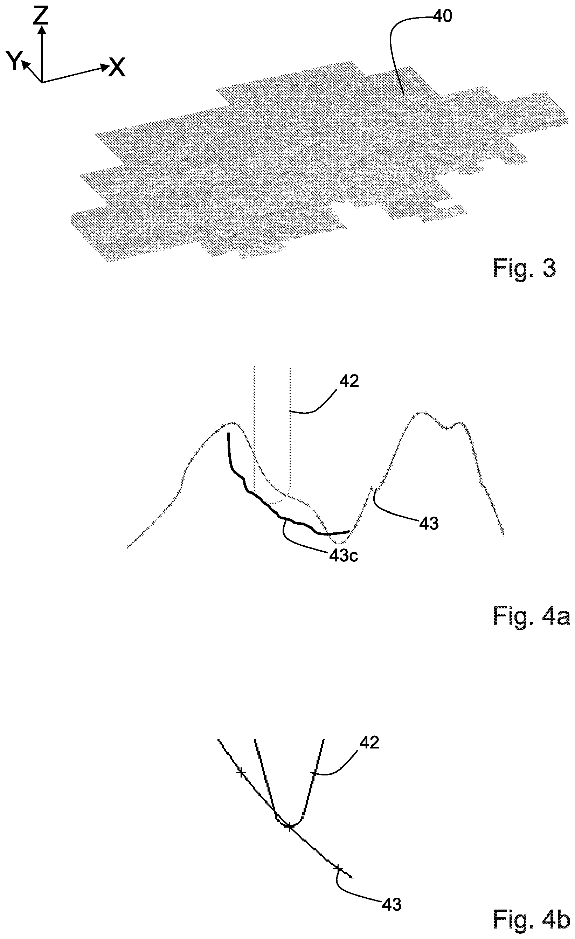

Un tel nuage de points 40 est fourni à l'étape 30, et un exemple de celui-ci est représenté dans la figure 3, qui représente un nuage de points d'une carte topographique de la Suisse, à une résolution donnée. Chaque point 40a du nuage de points comprend des informations spatiales sur le point mesuré en trois axes perpendiculaires X, Y et Z, X et Y étant les axes dans le plan horizontal, et Z étant l'axe vertical. Dans le cas des cartes topographiques, elles sont généralement exprimées en longitude (X), latitude (Y) et altitude (Z) respectivement. Les points peuvent être triés dans le plan XY en triant d'abord selon la valeur ascendante X, puis selon la valeur ascendante ou descendante Y (ou vice-versa) de façon à les disposer en deux dimensions dans le plan XY.

Dans les étapes 31 et 32, le nuage de points 40 est converti directement en instructions de mouvement selon les mêmes axes X, Y et Z, X et Y étant à nouveau dans le plan horizontal et Z étant l'axe vertical. Ces instructions de mouvement sont tout simplement les coordonnées de points dans l'espace à travers lequel la pointe de l'outil de finition 42 doit passer.

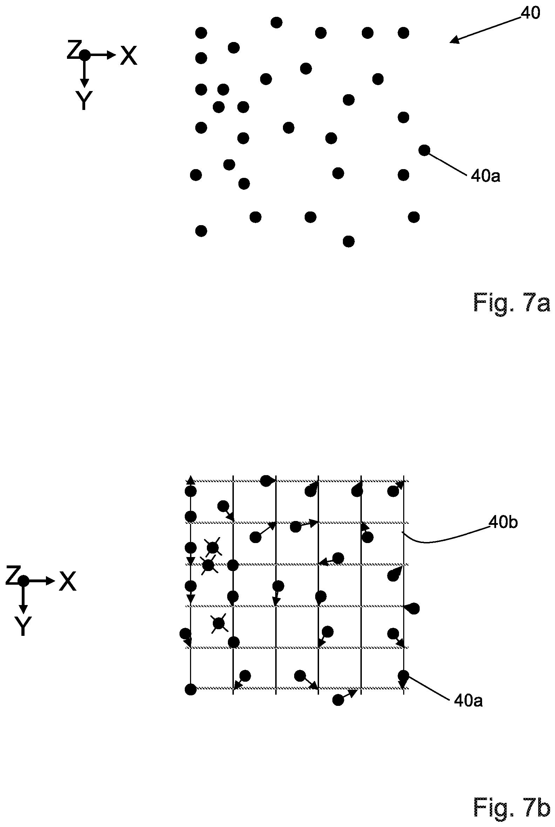

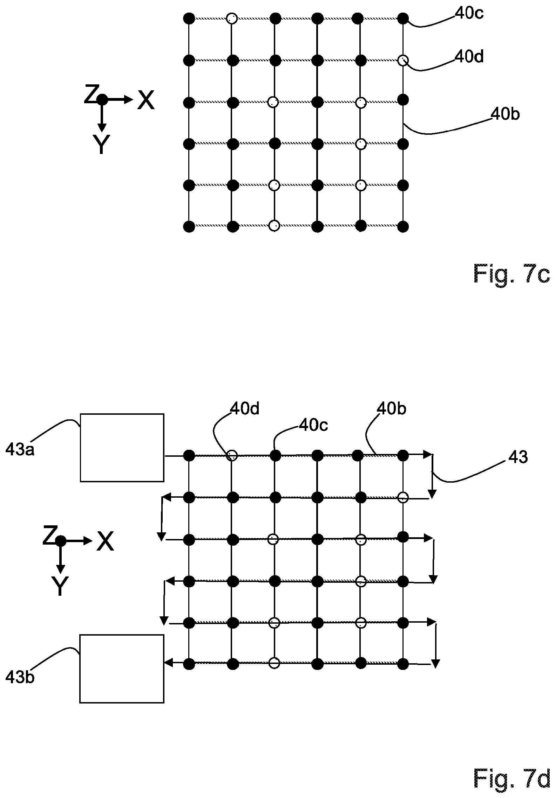

Ces instructions de mouvement sont calculées par un post-processeur dit direct, qui est une partie de logiciel exécuté sur un ordinateur. Le fonctionnement de ce post-processeur direct est illustré dans les figures 7a-7d. Ce post-processeur direct prend d'abord un nuage de points 40, comme illustré sur la figure 7a, et qui peut être regroupés ensemble à partir d'une pluralité de fichiers plus petits représentant chacun une partie du sujet de la maquette cartographique 9, puis met à l'échelle les données à l'échelle requise dépendant de la taille de cette maquette 9 à former, et en référence à un point de référence approprié pour la machine-outil CNC. Une conversion d'unités (par exemple longitude/latitude en millimètres ou micromètres) peut également avoir lieu à ce moment. Ceci est représenté sur la figure 7b, qui montre les points de donnée individuelle 40a superposée sur une grille 40b de la résolution désirée dans le plan XY.

A l'étape 31, les points de données 40a sont normalisés par rapport à la grille 40b, en modifiant les valeurs X et Y de chaque point de données 40a de manière à correspondre à une intersection de la grille 40b. Tous les points excédentaires, tels que les points intermédiaires où toutes les intersections de la grille sont déjà occupées peuvent être supprimés (comme indiqué par un "x"), ou peuvent également être fusionnés avec un autre point ou des points à une intersection de la grille en faisant par exemple la moyenne de ces points. En outre, toutes les intersections inoccupées de la grille peuvent être soit remplies par exemple par interpolation des points voisins, soit simplement laissées vide. Les points maillés normalisés 40c résultants sont représentés dans la figure 7c, avec des données de remplissage 40d représentées par des cercles vides plutôt que des points noirs.

La normalisation implique donc une quantification des positions XY, pour les aligner sur des positions de grille discrète, et une quantification de l'altitude Z, représentée par une valeur discrète. La normalisation peut aussi impliquer un filtrage passe-bas.

Un bloc d'en-tête 43a peut également être ajouté pour initialiser la machine-outil à commande numérique, et un bloc de bas de page 43b peut être ajouté pour terminer l'usinage, selon les besoins.

Dans le cas où le nuage de points 40 est déjà quadrillé, la normalisation effectuée par le post-processeur direct peut simplement mettre à l'échelle le nuage de points à la résolution souhaitée.

En raison de la grande quantité de données nécessaire pour être traitées, un traitement parallèle peut être utilisé.

Dans l'étape 34, un outil d'ébauche est choisi de manière à faire efficacement une première coupe dans le substrat, afin d'éviter que l'outil de finition ait à couper trop profond et enlève trop de matériau, ce qui provoquerait une usure excessive de l'outil, une formation excessive de copeaux et des contraintes élevées sur l'outil de finition 42 avec un risque aussi élevé de rupture de l'outil. A l'étape 35, le nuage de points (« premier ensemble de points ») est échantillonné afin de réduire le nombre de points et de permettre un ébauchage de la maquette en partant d'un nombre de points réduit. L'échantillonnage génère donc un deuxième ensemble de points. Dans un mode de réalisation, le nombre de points dans le deuxième ensemble est réduit d'un facteur N par l'échantillonnage, N étant supérieur à 100.

L'échantillonnage peut être réalisé en sélectionnant un point sur N, par exemple un point sur 100 ou un point sur 1000, dans le premier ensemble de points, et en éliminant les autres points. N est avantageusement comprise entre 100 et 10'000. Cette méthode d'échantillonnage présente l'avantage de la rapidité de calcul.

L'échantillonnage peut être réalisé en moyennant les positions de coordonnées XY de N points pris en compte dans chaque échantillon, et en attribuant à l'échantillon l'altitude Z correspondant au point d'altitude Z la plus élevée des points pris en compte dans l'échantillon. Cette variante a l'avantage de réduire le risque de générer une ébauche avec des points XY d'altitude trop basse, qui ne pourront plus être corrigés par la finition soustractive.

L'échantillonnage peut comporter une étape de filtrage spatial passe bas. Par exemple, l'échantillonnage peut être réalisé en moyennant les positions de coordonnées de N points pris en compte dans chaque échantillon, N étant avantageusement compris entre 100 et 10'000. La valeur d'altitude Z de chaque échantillon dépend ainsi de la valeur de plusieurs points.

L'échantillonnage peut comporter une étape de convolution avec un noyau d'échantillonnage. La fonction de convolution utilisée pour le noyau peut être choisie en tenant compte des propriétés de la topographie (par exemple de la bande passante spatiale) et/ou des propriétés de l'outil utilisé pour l'ébauchage, de manière à permettre une reconstruction de l'ébauche fidèle avec un nombre de points plus limité que le nombre de points requis pour obtenir la même fidélité en sélectionnant un point sur N. Dans un mode de réalisation, la fonction de convolution est de type sin(x)/x.

L'étape 35 comporte ensuite une étape de calcul de surfaces NURBS à partir du deuxième ensemble de points. Ce calcul est rendu possible sur un ordinateur ou une station de travail standard, grâce à la réduction du nombre de points. Ces surfaces NURBS peuvent ensuite être directement transmises à la commande CNC de l'outil d'ébauchage grossier, par exemple une fraiseuse à trois axes avec une fraise grossière.

Une deuxième étape d'ébauchage fin peut être mise en ordre, avec une deuxième fraise plus fine, afin de générer une ébauche de meilleure résolution. Cet ébauchage fin peut être effectué sur la base des surfaces NURBS déjà calculées, ou d'autres surfaces NURBS déterminées à partir d'un ensemble d'échantillons du nuage de points.

L'usinage comporte donc une étape 37 d'ébauchage grossier (et éventuellement d'ébauchage fin) sur la base des surfaces NURBS.

L'outil d'ébauche 44 présente un diamètre de coupe supérieur que celui de l'outil de finition 42, et sert à enlever suffisamment l'excès de matériau du substrat 45 dans lequel la maquette (ou son moule) 9 est usinée, de manière à laisser suffisamment de matière pour faire une coupe de finition de haute qualité, mais pas trop pour ne pas mettre à rude épreuve l'outil de finition 42.

L'usinage comporte ensuite une étape 38 de finition sur la base des instructions de mouvements entre les points du premier ensemble, ou entre points normalisés du premier ensemble. A cet effet, en lisant chaque ligne des points maillés normalisés 40c selon un balayage avant-et-arrière comme illustré dans la figure 4d, une série de passes d'usinage, d'abord dans un sens puis dans le sens inverse pour la ligne suivante, une trajectoire d'outil 43 peut être directement lue sur les points normalisés quadrillé 40c sans autre calcul. Alternativement, un motif de balayage tramé peut être généré en lisant les données de la grille, chaque ligne étant lue dans la même direction, même si cela est moins efficace en terme de temps machine en raison du temps nécessaire pour reculer l'outil 42 au début de la prochaine coupe. Dans le cas de points de données manquants, si le remplissage n'a pas été réalisé, les instructions avancent simplement à la prochaine intersection de la grille remplie dans la séquence.

Par rapport à une approche conventionnelle de définition des surfaces et de calcul des mouvements de l'outil requis pour former ces surfaces avec une forme donnée de l'outil, l'approche post-processeur direct est mieux utilisée avec un outil dont la pointe est suffisamment petite pour que les erreurs d'usinage résultant de la forme de l'outil de finition 42 soient réduites au minimum, qui est retenu à l'étape 33. Ce principe est illustré sur les Fig. 4a et 4b. Ces figures illustrent des trajectoires d'usinage 43 formées par des points maillés de données normalisées 40c. La figure 4a illustre le profil résultant 43c découpé avec un outil de finition 42 de trop grand diamètre. Comme on peut clairement le voir, ce profil 43 diffère sensiblement de la trajectoire 43 déterminée par les points du premier ensemble. En particulier, le diamètre important de l'extrémité de l'outil 42 entraîne des collisions avec les flancs les plus raides du relief, et empêche l'usinage de trous étroits ou d'angles droits au pied de falaises verticales, par exemple.

La taille de l'outil de finition doit donc être suffisamment fine pour permettre un usinage en passant directement sur les points du premier ensemble, sans les décalages de rayon calculés habituellement par les programmes de FAO. La figure 4b illustre un outil de finition 42 dont le diamètre de la pointe est suffisamment petit pour que le profil fini se situe dans une tolérance acceptable par rapport à la trajectoire d'usinage 43.

Un outil trop fin risque cependant de se casser fréquemment ; d'autre part, la courbure de l'extrémité de l'outil est trop prononcée, entraînant l'usinage de sillons formant des stries et des nervures visibles sur la surface. Il est donc avantageux d'utiliser un outil de finition dont le diamètre à l'extrémité est supérieur au pas entre deux points du premier ensemble de points, afin que les sillons se chevauchent en évitant de laisser une nervure entre deux sillons. Des résultats optimaux ont été obtenus avec des diamètres d'outil de finition entre 2-10 fois le pas entre les points du premier ensemble de points.

Dans la pratique, pour une très grande maquette 9 de plusieurs mètres de largeur, un outil de finition dont la pointe présente un diamètre de 2 mm peut être suffisant. Pour les plus petites maquettes, un diamètre de la pointe de l'outil de finition de 0.05mm maximum fourni un niveau de détail suffisant dans la pratique pour la manipulation d'image requise dans le dispositif électronique multimédia 3 comme décrit plus haut. En outre, le niveau de résolution et donc de détails fournis par un outil de ces dimensions est suffisante pour qu'un degré utile de zoom puisse être utilisé sur la caméra de l'appareil électronique multimédia. En principe, plus la pointe de l'outil de finition est petite, plus la précision et la résolution de la maquette 9 est grande, mais plus le temps machine nécessaire est long, plus la gestion des usures d'outils est complexe et plus la résolution de la grille nécessaire est grande. A l'étape 32, un outil de finition approprié est choisi à cet effet.

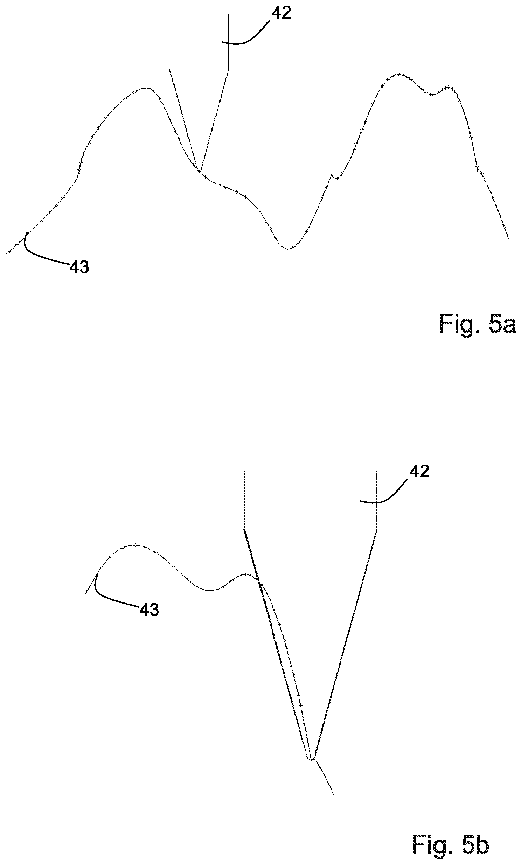

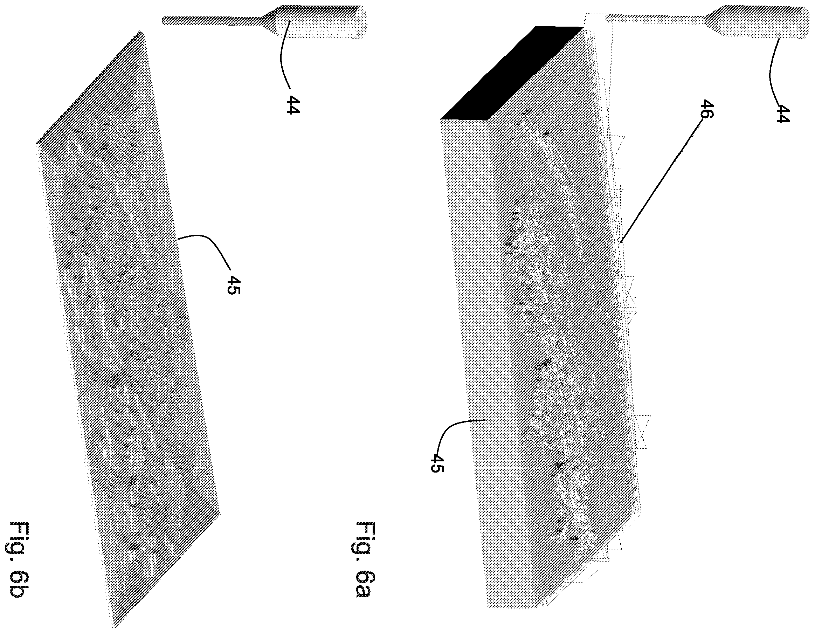

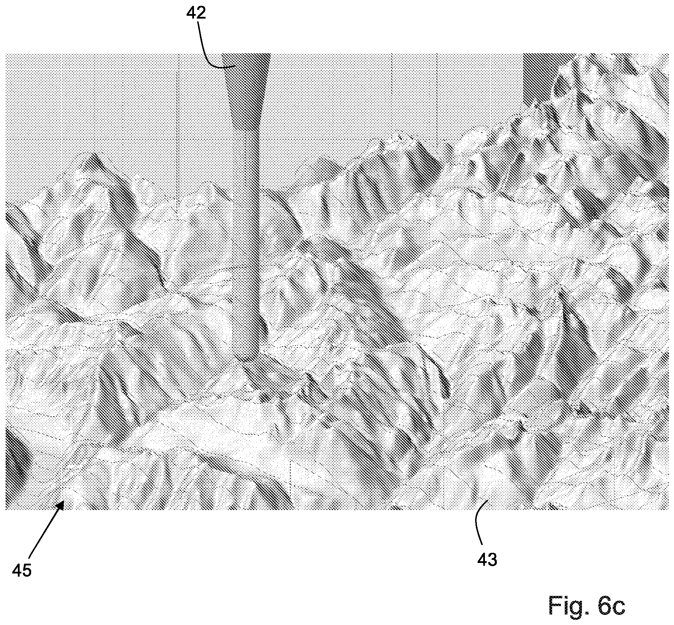

La trajectoire 43 de l'outil de finition est également illustrée dans une vue en trois dimensions sur la figure 6c. L'outil de finition 42 est illustré dans les figures 5a et 5b comme étant un outil conique. D'autres formes d'outils (cylindre, sphère, toriques ...) sont également, bien sûr, possible.

La taille de l'outil de finition est suffisamment fine pour permettre un usinage en passant directement sur les points du premier ensemble, sans les décalages de rayon calculés habituellement par les programmes de FAO.

Dans un mode de réalisation, l'outil de finition 42 est monté sur un robot 6 axes afin d'améliorer la précision et la résolution de la maquette 9. De cette manière, l'angle de l'outil de finition 42 peut être adapté de telle sorte que l'axe de l'outil de finition 42 soit toujours perpendiculaire à la trajectoire d'usinage 43. Un usinage avec une fraiseuse à trois axes peut aussi être mis en œuvrepour un temps de traitement plus rapide.

Par rapport à un usinage CNC conventionnel basé sur la combinaison de formes standard et de mouvements standard de l'outil (arcs, lignes droites, cannelures et ainsi de suite), la présente invention procure la possibilité d'avoir beaucoup plus de détails et par conséquent la reproduction plus précise de la forme sur laquelle se fonde la maquette 9.

La figure 6b illustre un substrat 45 après ébauchage, et la figure 6c illustre le substrat après les opérations de finition le long de la trajectoire de l'outil de finition 43 de manière à créer une maquette 9 (ou son moule).

Bien que l'utilisation du post-processeur direct décrit ci-dessus peut entraîner la production d'un grand nombre de points redondants. Par exemple, la surface d'un lac peut être décrite comme une surface plane et peut donc être définie de manière plus efficace avec des opérations conventionnelles CNC. Elle ne résulte en aucune surface irrégulière étant descriptible et étant ainsi usinée avec précision.

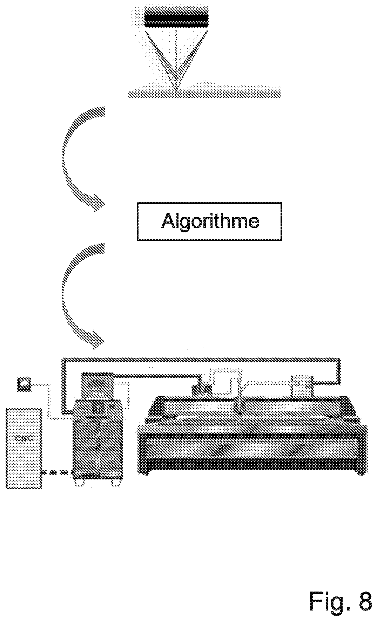

Avantageusement, en référence à la figure 8, le nuage de points représentant des points sur la surface de l'objet, mesurée par laser 54, microscope électronique à balayage, confocal, ou tout dispositif approprié bien connu de l'homme de l'art, est envoyé en continu et traité par le post-processeur direct décrit ci-dessus et le nuage de points traité est envoyé en continu à la CNC 55 qui convertit en continu ledit nuage de points en instructions de déplacement de la pointe de l'outil de finition 42 selon les axes. Par conséquent, le système selon l'invention fonctionne d'une manière continue pour réduire le temps de traitement.

## Revendications

1. Procédé d'usinage d'une maquette de reliefs, **caractérisé par** les étapes suivantes :
1. Obtention d'un premier ensemble d'au moins cinq millions de points (40), chaque point (40a) correspondant à une coordonnée tridimensionnelle (XYZ) ;
2. Echantillonnage dudit ensemble de points, de manière à obtenir un deuxième ensemble de points, le deuxième ensemble de points comprenant moins de points que le premier ensemble ;
3. Calcul de surfaces, par exemple calcul de surfaces NURBS, à partir du deuxième ensemble de points ;
4. Génération d'une ébauche grossière de la maquette à partir desdites surfaces ;
5. Finition de l'ébauche à l'aide d'un outil de finition en passant successivement par les points du premier ensemble de points ou par les points normalisés du premier ensemble de points.

2. Procédé d'usinage selon la revendication 1, ladite ébauche grossière étant usinée à l'aide d'une première fraise, dite fraise grossière, en commandant les déplacements de ladite fraise grossière à partir desdites surfaces.

3. Procédé d'usinage selon l'une des revendications 1 ou 2, comportant une étape d'usinage d'une ébauche fine à partir de ladite ébauche grossière à l'aide d'une deuxième fraise, dite fraise intermédiaire, en commandant les déplacements de ladite fraise intermédiaire à partir desdites surfaces ;
ladite étape de finition étant réalisée à partir de ladite ébauche fine.

4. Procédé selon l'une des revendications 1 à 3, la finition de l'ébauche étant obtenue en suivant une trajectoire d'outil (43) entre lesdits points normalisés du premier ensemble de points, la normalisation desdits points comportant une quantification de leur position.

5. Procédé selon l'une des revendications 1 à 4, la finition de l'ébauche étant obtenue en suivant une trajectoire d'outil (43) entre lesdits points normalisés du premier ensemble de points, la normalisation desdits points comportant une interpolation de points.

6. Procédé selon l'une des revendications 1 à 5, la finition de l'ébauche étant obtenue en suivant une trajectoire d'outil (43) entre lesdits points normalisés du premier ensemble de points, la normalisation desdits points comportant un filtrage passe-bas.

7. Procédé selon l'une des revendications 1 à 6, les points du premier ensemble correspondant à des données topographiques, le procédé comportant une étape de projection de ces données topographiques sur une sphère afin de générer une maquette reproduisant la courbure terrestre.

8. Procédé selon l'une des revendications 1 à 7, ladite ébauche grossière étant réalisée en gardant une surépaisseur, en fabrication soustractive, ou une sous-épaisseur, en fabrication additive, de manière à permettre le retrait respectivement l'ajout de matière supplémentaire lors de l'étape de finition.

9. Procédé selon l'une des revendications 1 à 8, lesdites surfaces correspondant à un profil topographique dont l'altitude moyenne est plus haute que celle correspondant à un profil topographique correct, de manière à laisser un excédent de matière retiré lors de la finition.

10. Procédé selon l'une des revendications 1 à 9, le diamètre de l'outil de finition étant compris entre deux et dix fois le pas entre les points du premier ensemble de points.

11. Procédé selon l'une des revendications 1 à 10, la finition étant effectuée par fraisage à l'aide d'un burin, le procédé comportant une étape d'aiguisage périodique dudit burin.

## Patentansprüche

1. Verfahren zur Bearbeitung eines Reliefmodells, **gekennzeichnet durch** die folgenden Schritte:
1. Gewinnen eines ersten Satzes von mindestens fünf Millionen Punkten (40), wobei jeder Punkt (40a) einer dreidimensionalen Koordinate (XYZ) entspricht;
2. Abtasten des Satzes von Punkten, um einen zweiten Satz von Punkten zu erhalten, wobei der zweite Satz von Punkten eine geringere Anzahl von Punkten als der erste Satz umfasst;
3. Berechnen von Flächen, vorzugsweise Berechnen von NURBS-Flächen, aus dem zweiten Satz von Punkten;
4. Erzeugen eines groben Rohlings des Modells aus den genannten Flächen;
5. Fertigstellen des Rohlings mit einem Endbearbeitungswerkzeug, wobei nacheinander die Punkte des ersten Satzes von Punkten oder die normierten Punkte des ersten Satzes von Punkten durchlaufen werden.

2. Bearbeitungsverfahren nach Anspruch 1, wobei der grobe Rohling mit einem ersten Fräser, dem sogenannten Grobfräser, bearbeitet wird, indem die Bewegungen des Grobfräsers von den Flächen aus angesteuert werden.

3. Bearbeitungsverfahren nach einem der Ansprüche 1 oder 2, mit einem Schritt des Bearbeitens eines feineren Rohlings aus dem groben Rohling mit einem zweiten Fräser, dem sogenannten Zwischenfräser, wobei die Bewegungen des Zwischenfräsers von den Flächen aus gesteuert werden;
wobei der Schlichtungsschritt ausgehend von dem feinen Rohling durchgeführt wird.

4. Bearbeitungsverfahren nach einem der Ansprüche 1 bis 3, wobei die Fertigstellung des Rohlings dadurch erreicht wird, dass eine Werkzeugbahn (43) zwischen den normalisierten Punkten des ersten Satzes von Punkten verfolgt wird, wobei die Normalisierung der Punkte eine Quantifizierung ihrer Position umfasst.

5. Bearbeitungsverfahren nach einem der Ansprüche 1 bis 4, wobei die Fertigstellung des Rohlings dadurch erreicht wird, dass einer Werkzeugbahn (43) zwischen den normalisierten Punkten des ersten Satzes von Punkten gefolgt wird, wobei die Normalisierung der Punkte eine Interpolation von Punkten umfasst.

6. Bearbeitungsverfahren nach einem der Ansprüche 1 bis 5, wobei die Endbearbeitung des Rohlings durch Verfolgung einer Werkzeugbahn (43) zwischen den normierten Punkten des ersten Satzes von Punkten erfolgt, wobei die Normierung der Punkte eine Tiefpassfilterung umfasst.

7. Bearbeitungsverfahren nach einem der Ansprüche 1 bis 6, wobei die Punkte des ersten Satzes topographischen Daten entsprechen, wobei das Verfahren einen Schritt des Projizierens dieser topographischen Daten auf eine Kugel umfasst, um ein Modell zu erzeugen, das die Erdkrümmung wiedergibt.

8. Bearbeitungsverfahren nach einem der Ansprüche 1 bis 7, wobei der grobe Rohling unter Beibehaltung eines Übermaßes, bei der subtraktiven Herstellung oder eines Untermaßes, bei der additiven Herstellung, hergestellt wird, um das Entfernen beziehungsweise Hinzufügen von zusätzlichem Material beim Endbearbeitungsschritt zu ermöglichen.

9. Bearbeitungsverfahren nach einem der Ansprüche 1 bis 8, wobei die Flächen einem topografischen Profil entsprechen, dessen mittlere Höhe höher ist als diejenige, die einem korrekten topografischen Profil entspricht, so dass ein Materialüberschuss verbleibt, der bei der Endbearbeitung entfernt wird.

10. Bearbeitungsverfahren nach einem der Ansprüche 1 bis 9, wobei der Durchmesser des Endbearbeitungswerkzeugs zwischen dem Zwei- und Zehnfachen des Abstands zwischen den Punkten des ersten Satzes von Punkten liegt.

11. Bearbeitungsverfahren nach einem der Ansprüche 1 bis 10, wobei die Endbearbeitung durch Fräsen mit einem Meißel erfolgt, wobei das Verfahren einen Schritt des periodischen Schärfens des Meißels umfasst.

## Claims

1. Method of machining a relief model, **characterized by** the following steps:
1. Obtaining a first set of at least five million points (40), each point (40a) corresponding to a three-dimensional coordinate (XYZ);
2. Sampling said set of points so as to obtain a second set of points, the second set of points comprising fewer points than the first set;
3. Calculation of surfaces, for example calculation of NURBS surfaces, from the second set of points;
4. Generating a rough preform of the model from said surfaces;
5. Finishing the preform with a finishing tool by successively passing through the points of the first set of points or the normalized points of the first set of points.

2. Machining method according to claim 1, said rough preform being machined using a first cutter, called coarse cutter, controlling the movements of said coarse cutter from said surfaces.

3. Machining method according to one of claims 1 or 2, comprising a step of machining a fine preform from said rough preform with a second cutter, called intermediate cutter, by controlling the movements of said intermediate cutter from said surfaces;
said finishing step being carried out from said fine preform.

4. Method according to one of claims 1 to 3, the finishing of the preform being obtained by following a tool path (43) between said normalized points of the first set of points, the normalization of said points including a quantization of their position.

5. Method according to one of claims 1 to 4, the finishing of the preform being obtained by following a tool path (43) between said normalized points of the first set of points, the normalization of said points comprising an interpolation of points.

6. Method according to one of claims 1 to 5, the finishing of the preform being obtained by following a tool path (43) between said normalized points of the first set of points, the normalization of said points comprising a low-pass filtering.

7. Method according to one of claims 1 to 6, wherein the points of the first set correspond to topographic data, the method comprising a step of projecting these topographic data on a sphere in order to generate a model reproducing the curvature of the earth.

8. Method according to one of claims 1 to 7, said rough preform being made whilst keeping an extra thickness in subtractive manufacture, or a sub-thickness in additive manufacturing, so as to allow the removal respectively the addition of additional material during the finishing step.

9. Method according to one of claims 1 to 8, said surfaces corresponding to a topographic profile whose average altitude is higher than that corresponding to a correct topographic profile, so as to leave an excess of material removed during the finishing.

10. Method according to one of claims 1 to 9, wherein the diameter of the finishing tool is comprised between two and ten times the pitch between the points of the first set of points.

11. Method according to one of claims 1 to 10, wherein the finishing is performed by milling using a chisel, with the method comprising a step of periodically sharpening said chisel.
